# EUROPÄISCHE PATENTSCHRIFT

(11) **EP 1 623 368 B1**
(45) Veröffentlichungstag und Bekanntmachung des Hinweises auf die Patenterteilung: **14.11.2007**
(21) Anmeldenummer: 04731322.6
(22) Anmeldetag: 06.05.2004
(51) Int. Cl.: G06K 19/077

(54) **VORRICHTUNG UND VERFAHREN ZUM VERBINDEN VON MIKROCHIPMODULEN MIT ANTENNEN**
DEVICE AND METHOD FOR LINKING MICROCHIP MODULES WITH ANTENNAS
DISPOSITIF ET PROCEDE PERMETTANT DE RELIER DES MODULES MICROPUCE AVEC DES ANTENNES

(30) Priorität: 08.05.2003 DE 10320843
(43) Veröffentlichungstag der Anmeldung: 08.02.2006
(73) Patentinhaber: Mühlbauer AG, 93426 Roding (DE)
(72) Erfinder: MENDE, Bernhard, 01127 Dresden (DE); HOCHMANN, Sven, 01259 Dresden (DE)
(74) Vertreter: Hannke, Christian
(86) Internationale Anmeldenummer: PCT/EP2004/004798
(87) Internationale Veröffentlichungsnummer: WO 2004/100062

(56) Entgegenhaltungen:
- EP-A- 1 043 925
- DE-A- 10 136 359

## Beschreibung

Die Erfindung betrifft eine Vorrichtung zum Verbinden von Mikrochipmodulen mit auf mindestens einem ersten Träger angeordneten Antennen zum Herstellen von Transpondern, insbesondere Smart Labels zum Übertragen der Mikrochipmodule von mindestens einem zweiten Träger auf vorbestimmte Stellen des ersten Trägers gemäß dem Oberbegriff des Patentanspruches 1. Des Weiteren betrifft die Erfindung ein Verfahren zum Verbinden von Mikrochipmodulen mit auf mindestens einem ersten Träger angeordneten Antennen zum Herstellen von Transpondern, insbesondere Smart Labels gemäß dem Oberbegriff des Patentanspruches 11.

Aus der EP 1 043 925 A2 ist eine Vorrichtung und ein Verfahren zum automatischen Übertragen einer Vielzahl von gleichen elektronischen Komponenten auf eine Vielzahl von Schaltungen, die auf einem Substratband angeordnet sind, bekannt. Das Substratband wird von einer Rolle abgewickelt und über eine Hauptrolle mit einer Antennenübertragungsrolle in Verbindung gebracht, um der Reihe nach einzelne Antennen auf das Substratband aufzubringen. Anschließend werden über eine weitere Rolle, die mit der Hauptrolle in Kontakt steht, die einzelnen elektronischen Komponenten der Reihe nach auf das Substratband aufgebracht, um eine Mehrzahl von Transpondem zu erhalten.

Eine derartige Vorrichtung benötigt zum einen die zwei Übertragungsschritte des Aufbringens der Antennen und des Aufbringens der elektronischen Komponenten auf das Substratband. Zum anderen geschieht die Übertragung der elektronischen Komponenten auf das Substrat in einem Bereich, in dem das auf der Hauptrolle abrollende Substratband der die elektronischen Komponenten tragenden Rolle nahe kommt. Hierbei sind das Substratband und die elektronischen Komponenten an ihrem Treffpunkt aufgrund ihrer Anordnung auf den Rollenoberflächen auf einer kreisförmigen Fläche verlaufend angeordnet. Derartige Konstruktionen erfordern aufgrund dieses kreisförmigen Verlaufs spezielle Einrichtungen zum Entnehmen der Komponenten von der weiteren Rolle, zum Übertragen der Komponenten auf das Substratband und zum Verbinden der Komponenten mit dem Substratband, welche aufwendig in der Konstruktion und kostenintensiv in der Herstellung sind. Zudem ist aufgrund der kreisförmigen Anordnung der in Reihe angeordneten Komponenten und des Substratbandes ein gleichzeitiger Betrieb der Abläufe des Entnehmens, Übertragens und Verbindens der Komponenten nur mit zusätzlich technisch aufwendigen Konstruktionen möglich.

DE 101 36 359 A1 zeigt Verfahren zum Verbinden von Mikrochipmodulen mit auf einem ersten Trägerband angeordneten Antennen zum Herstellen eines Transponders, bei dem die Mikrochipmodule zum Aufbringen auf das erste Trägerband zuvor dadurch vom einem zweiten Trägerband abgelöst werden, indem das zweite Trägerband um eine scharfe Kante umgelenkt wird. Derartige Konstruktionen eignen sich nicht zum Trennen der Mikrochipmodule von dem Trägerband mittels eines Schneidvorganges, der oftmals notwendig ist, um bestimmte Mikrochipmodularten aus einem Verbund zu lösen.

Demzufolge liegt der vorliegenden Erfindung die Aufgabe zugrunde, eine Vorrichtung zum Verbinden von Mikrochipmodulen mit auf Trägern angeordneten Antennen zum Herstellen von Transpondem zur Verfügung zu stellen, bei der ein einfaches und schnelles Übertragen der Mikrochipmodule von dem einen auf den anderen die Antennen bereits tragende Träger selbst bei einem vorangegangenen Ausschneidvorgang zum Lösen der Mikrochipmodule von ihrem Träger möglich ist und deren Aufbau einfach und kostengünstig in der Herstellung ist. Des Weiteren liegt der Erfindung die Aufgabe zugrunde, ein Verfahren zum Verbinden der Mikrochipmodule mit den auf den Trägern angeordneten Antennen zur Verfügung zu stellen.

Diese Aufgabe wird vorrichtungsseitig gemäß den Merkmalen des Patentanspruches 1 und verfahrensseitig gemäß den Merkmalen des Patentanspruches 11 gelöst.

Ein wesentlicher Punkt der Erfindung ist darin zu sehen, dass bei einer Vorrichtung zum Verbinden von Mikrochipmodulen mit auf mindestens einem ersten Träger angeordneten Antennen zum Herstellen von Transpondern, insbesondere Smart Labels zum Übertragen der Mikrochipmodule von mindestens einem zweiten Träger auf vorbestimmte Stellen des ersten Trägers die übereinander schrittweise oder fortlaufend bewegbaren Träger an einem vorbestimmten Abschnitt vorzugsweise parallel zueinander angeordnet sind und zwischen den Trägern eine Wendekopfeinrichtung zur Übertragung einzelner Mikrochipmodule von dem zweiten auf den ersten Träger mittels einer Drehbewegung angeordnet ist. Die Wendekopfeinrichtung ist um eine in Trägerbreitenrichtung verlaufende Achse um vorzugsweise 180° drehbar und saugt mittels einer Vakuumerzeugungseinrichtung die einzelnen Mikrochipmodule, die zuvor von dem zweiten Träger getrennt werden, an, dreht sich um 180° und ordnet sie auf den darunter liegenden ersten Träger an. Anschließend werden die Mikrochipmodule mittels Werkzeuge automatisch auf den ersten Träger aufgepresst, vorzugsweise durchsetzgefügt. Hierbei können der Fügevorgang und der Trennvorgang zeitgleich ablaufen, so dass ein schneller und einfacher Ablauf des gesamten Entnahme-, Übertragungs- und Verbindungsvorganges ermöglicht wird.

Durch den Einsatz einer mehrseitigen Wendekopfeinrichtung kann sich vorteilhaft ein Zurückdrehen der Wendekopfeinrichtung aus der Position des Anordnens der Mikrochipmodule auf dem ersten Träger in eine Position der Entnahme und des Ansaugens des Mikrochipmoduls von dem zweiten Träger erübrigen, da sämtliche Seiten der Wendekopfeinrichtung für die Durchführung jeder dieser Vorgänge ausgebildet ist. Beispielsweise kann die Wendekopfeinrichtung vier Seiten aufweisen, so dass jeweils eine Drehbewegung von nur 90° notwendig ist. Dies führt wiederum zu einer Zeitersparnis im Produktionsablauf.

Die Träger sind vorteilhaft als Trägerbänder, Trägerblätter oder Trägerstreifen ausgebildet.

Vorteilhaft können das erste und/oder zweite Trägerband als Zweispurband oder Mehrspurband ausgebildet sein, um die gleichzeitige Bearbeitung mehrerer parallel zueinander angeordneter Trägerbänder und Mikrochipmodule zu ermöglichen. Dies führt zu einer weiteren Zeitersparnis beim Produktionsablauf.

Für eine exakte Positionierung der Mikrochipmodule (Interposer) unter einer Trenneinrichtung zum Trennen der Mikrochipmodule aus dem zweiten Trägerband und über der Wendekopfeinrichtung ist eine Indexvorrichtung zum Führen des zweiten Bandes in Vorschub- und seitlicher Richtung vorgesehen. Die Trenneinrichtung kann als Schneideeinrichtung, Ausstanzeinrichtung oder Lauserschneideeinrichtung ausgebildet sein.

Die Trägerbänder sind jeweils von einer ersten Rolle abrollbar und auf einer zweiten Rolle aufrollbar.

Die für den Durchsetzfügungsvorgang vorgesehenen Montagewerkzeuge werden mittels einer elektromagnetischen Antriebseinrichtung für eine Schlageinrichtung, die mit den Montagewerkzeugen verbunden ist, zum beschleunigten Bewegen der Montagewerkzeuge in Richtung der aufzupressenden Mikrochipmodule und zur Durchführung des Aufpressvorganges mit einer vorbestimmten Eindringtiefe der Mikrochipmodule in das erste Trägerband angetrieben.

Die Schlageinrichtung umfasst ein hammerartiges Element, welches vorzugsweise elektromagnetisch oder mittels einer vorgespannten Feder angetrieben wird.

Die elektromagnetische Antriebseinrichtung ist mit einer Einstelleinrichtung verbunden, die eine Bewegung der Antriebseinrichtung erst nach Überwinden einer definierten und einstellbaren Kraft ermöglicht, so dass die Ablaufparameter, wie die Fügekraft und der Impuls variiert werden können.

Gemäß einer bevorzugten Ausführungsform wird die Magneteinrichtung mittels einer Steuereinrichtung in Abhängigkeit von den momentanen Positionierungen der Schneideeinrichtung, der Wendekopfeinrichtung und der aufzupressenden Mikrochipmodule in ihrer Bewegung gesteuert, so dass eine Koordination der Bewegungsabläufe dieser verschiedenen Einrichtungen für einen kollisionsfrei gesteuerten Arbeitsablauf und zur Verringerung der Zeitabschnitte pro Arbeitszyklus erreicht wird.

Bei einem erfindungsgemäßen Verfahren zum Verbinden von Mikrochipmodulen mit auf mindestens einem ersten Träger angeordneten Antennen zum Herstellen von Transpondern, bei dem die Mikrochipmodule von mindestens einem zweiten Träger abgelöst und auf vorbestimmte Stellen des ersten Trägers aufgebracht werden, wobei beide Träger übereinander gebracht werden, verlaufen die übereinander gebrachten Träger an einem vorbestimmten Abschnitt parallel zueinander, wobei einzelne Mikrochipmodule mittels einer zwischen den Trägern angeordneten drehbaren Wendekopfeinrichtung von dem zweiten auf den ersten Träger übertragen werden. Hierfür saugt die Wendekopfeinrichtung mittels eines erzeugten Vakuums mindestens ein Mikrochipmodul an, welches von dem zweiten Träger zuvor gelöst worden ist, und legt diesen durch eine Drehbewegung von vorzugsweise 180° auf die vorbestimmten Stellen des darunter liegenden ersten Trägers ab.

Ein zeitoptimierter Arbeitsablauf kann dadurch erreicht werden, dass ein Trennvorgang, zum Beispiel durch Ausschneiden einzelner Mikrochipmodule aus dem zweiten Träger, und ein Montagevorgang zum Aufpressen, insbesondere Durchsetzfügen weiterer einzelner Mikrochipmodule auf den ersten Träger zeitgleich stattfinden.

Weitere vorteilhafte Ausführungsformen ergeben sich aus den Unteransprüchen.

Vorteile und Zweckmäßigkeiten sind der nachfolgenden Beschreibung in Verbindung mit der Zeichnung zu entnehmen. Hierbei zeigen:
- Fig.1: eine vereinfachte schematische Darstellung des Grundprinzips der erfindungsgemäßen Vorrichtung in Seitenansicht;
- Fig.2: eine vereinfachte schematische Darstellung des Grundprinzips der erfindungsgemäßen Vorrichtung aus Fig. 1 in Draufsicht;
- Fig.3: eine schematische Seitenansicht eines Ausschnitts der erfindungsgemäßen Vorrichtung mit einer Wendekopfeinrichtung gemäß einer Ausführungsform der Erfindung;
- Fig.4: eine schematische Seitenansicht einer Schneideeinrichtung gemäß einer Ausführungsform der Erfindung;
- Fig.5: eine schematische Darstellung einer Indexführungseinrichtung in Draufsicht gemäß einer Ausführungsform der Erfindung, und
- Fig.6: eine schematische Draufsicht einer elektromagnetischen Antriebseinrichtung gemäß einer Ausführungsform der Erfindung;

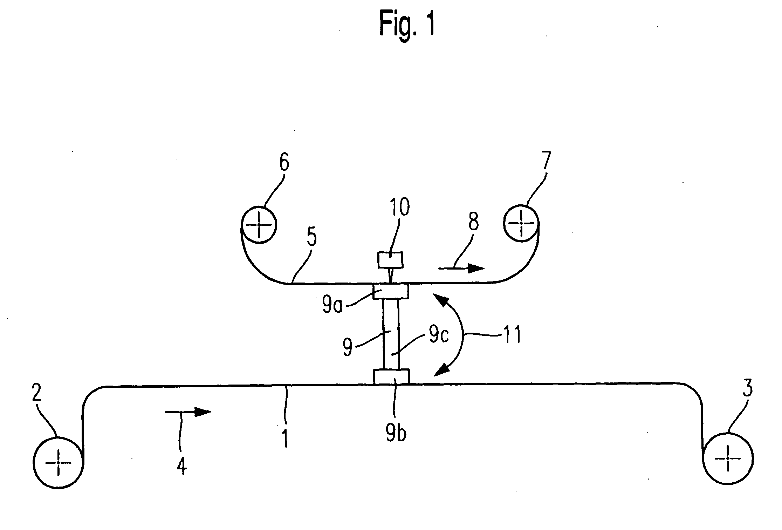

Figur 1 zeigt in einer vereinfachten schematischen Darstellung das Grundprinzip der erfindungsgemäßen Vorrichtung. Bei der Vorrichtung wird ein erstes Trägerband 1 von einer ersten Rolle 2 abgewickelt und auf einer zweiten Rolle 3 aufgewickelt. Die Laufrichtung des ersten Trägerbandes 1 wird durch den Pfeil 4 angedeutet.

Auf dem ersten Trägerband 1 sind an der Oberseite hier nicht gezeigte Antennen angeordnet, die beispielsweise durch galvanisches Abscheiden hergestellt werden können.

In einem zweiten oberhalb des ersten Trägerbandes 1 parallel dazu verlaufenden zweiten Trägerband 5 sind hier nicht gezeigte Mikrochipmodule angeordnet. Das zweite Trägerband 5 wird von einer weiteren ersten Rolle 6 abgerollt und auf eine weitere zweite Rolle 7 aufgerollt. Eine Laufrichtung des zweiten Trägerbandes 5 wird durch den Pfeil 8 angedeutet.

Zwischen den beiden Trägerbändern 1 und 5 ist eine Wendekopfeinrichtung 9 mit einer oberen und unteren Wendekopfseite 9a und 9b derart angeordnet, dass sie um eine senkrecht zur Bildebene ausgerichtete Achse 9c gedreht werden kann, wie es durch den Pfeil 11 angedeutet wird. Beide Wendekopfseiten 9a, 9b sind sowohl zum Ansaugen des aus dem zweiten Trägerband 5 mittels einer Schneideeinrichtung 10 ausgeschnittenen Mikrochipmoduls als auch zum Ablegen des Mikrochipmoduls auf dem ersten Trägerband 1 vorgesehen.

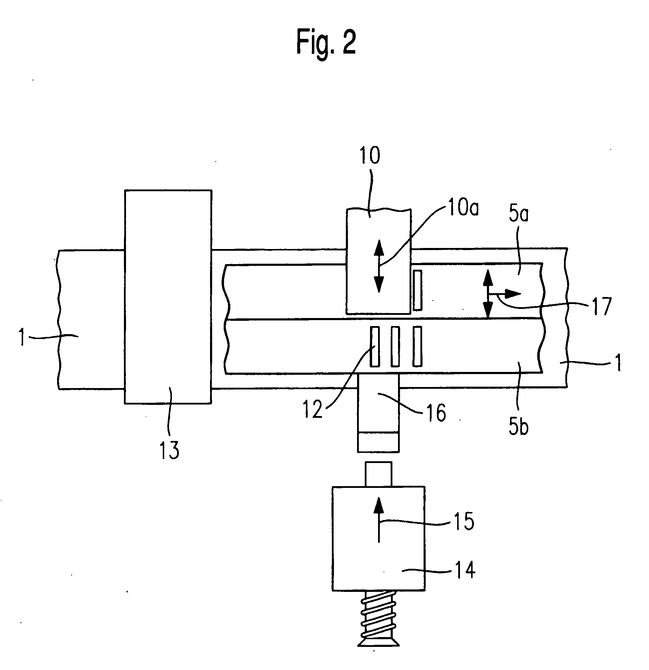

Fig. 2 zeigt in einer vereinfachten schematischen Darstellung das Grundprinzip der Vorrichtung in einer Draufsicht. Wie dieser Darstellung zu entnehmen ist, besteht das zweite Trägerband 5 aus zwei parallel zueinander verlaufenden nebeneinander angeordneten Trägerbändern 5a und 5b. In beiden Trägerbändern 5a und 5b sind Mikrochipmodule 12 angeordnet, die mittels der Schneideeinrichtung 10, die eine Verschiebebewegung 10a zu Ihrer Positionierung über den Mikrochipmodulen durchführen kann, aus dem zweiten Trägerbändern 5a, 5b ausgeschnitten werden können.

Ein eingangs angeordnetes Erkennungssystem 13, das vorzugsweise als Visionsystem mit Kamera oder Sensorikelementen mit Auswertungselementen ausgebildet ist, dient der Erkennung und Positionierung der auf dem ersten Trägerband 1 angeordneten Antennen und deren Positionierung in Bezug auf eine Antriebseinrichtung für die Montage der Chipmodule.

Eine elektromagnetische Antriebseinrichtung 14 dient zusammen mit einer Schlageinrichtung zum Erzeugen und Übertragen eines Impulses auf die Werkzeuge, welche in der als Niederhalter 16 ausgestalteten Wendekopfeinrichtung integriert sind und durch Fügen des auf dem ersten Trägerband 1 abgelegten Mikrochipmoduls mit vorbestimmter Eindringtiefe zum Fixieren des Moduls auf dem ersten Trägerband 1 vorgesehen sind. Die durch einen Beschleunigungsimpuls hervorgerufene Verschiebebewegung wird durch den Pfeil 15 angedeutet. Beim Montageablauf arbeiten die Werkzeuge gegen einen in seiner Lage fixierten Gegenhalter in Form eines Ambosses.

Beim Fügungsvorgang der Chipmodule verhaken sich die Werkzeuge in den Fügepartnern und werden durch eine Rückholeinrichtung in ihre Ursprungsposition innerhalb der Wendekopfeinrichtung 9 gebracht.

Für die Drehung des Wendekopfs und den Transport des ersten Trägerbandes 1 ist es notwendig, die entsprechenden Bauteile freizugeben. Dazu wird der Gegenhalter (Amboss) nach unten abgesenkt und eine Indexführungseinrichtung für das zweite Trägerband nach oben angehoben.

Eine Indexführungseinrichtung führt eine genaue Positionierung der Trägerbänder 5a, 5b in seitlicher und Vorschubrichtung gegenüber der Schneideeinrichtung 10 durch. Hierbei wird zur Synchronisation der Vorschubbewegung des ersten und der zweiten Trägerbänder 1, 5a, 5b und der Schneideeinrichtungsbewegung eine schrittweise Vorschubbewegung mittels einer hier nicht gezeigten Steuereinrichtung realisiert.

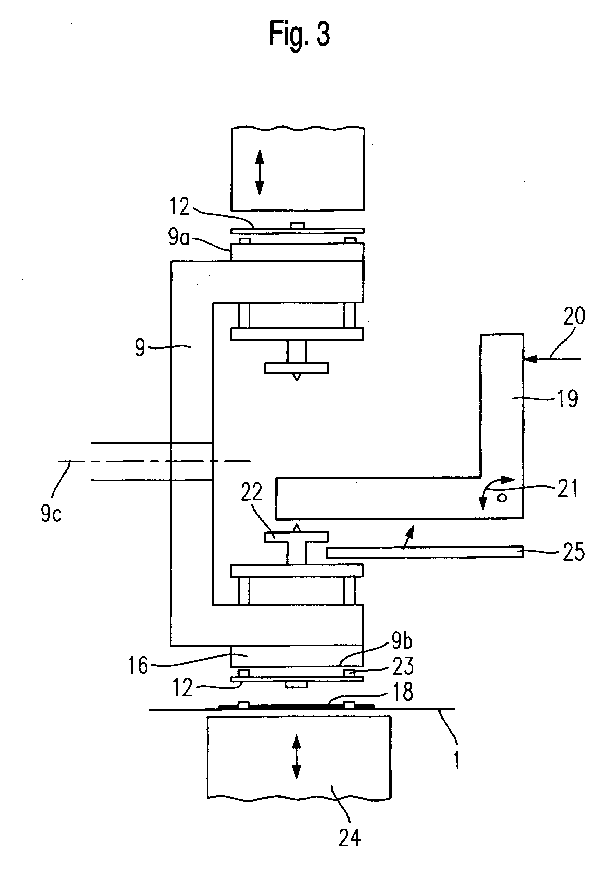

Fig. 3 zeigt in einer schematischen Seitenansicht einen Ausschnitt der erfindungsgemäßen Vorrichtung mit der Wendekopfeinrichtung gemäß einer Ausführungsform der Erfindung. Die Wendekopfeinrichtung 9 besteht aus insgesamt zwei Wendekopfseiten 9a und 9b. Demzufolge dreht sich der Wendekopf bei jedem Übertragungsvorgang eines Mikrochipmoduls um 180°, um das Mikrochipmodul 12 von dem oberen zweiten Trägerband 5 auf das untere erste Trägerband 1 mittels eines ansaugenden Vakuums zu übertragen. Hierfür dreht sich der Wendekopf um die Drehachse 9c.

Sobald sich das Mikrochipmodul 12 durch Drehen des Wendekopfs knapp oberhalb des ersten Trägerbandes 1 befindet, wird eine Schlageinrichtung 19 mit einem integrierten Hammer mittels des von einem hier nicht gezeigten elektromagnetischen Antrieb ausgelösten Kraftimpulses, wie er durch den Pfeil 20 angedeutet wird, verschwenkt, wie es durch den Pfeil 21 dargestellt wird. Diese Schwenkung bewirkt eine Nachuntenbewegung eines Werkzeugs 22, wodurch ein Fügewerkzeug 23, welches an dem Niederhalter 16 angebracht ist, gegen das Trägerband 1 gedrückt wird und ein Durchsetzfügungsvorgang stattfindet. Ein entsprechechendes Gegenstück während des Fügevorgangs stellt der Amboss 24 dar.

Die Rückholeinrichtung 25 holt anschließend das Werkzeug 22 durch eine Nachobenbewegung wieder in die Ausgangsstellung zurück.

An dem Niederhalter 16 ist eine nicht näher dargestellte Vakuumsaugplatte zum Ansaugen des Moduls befestigt.

Alle Einrichtungen zum Trennen und Montieren der Chipmodule sowie die Schlageinrichtung sind oberhalb des ersten Trägerbandes 1 quer zur Transportrichtung des Bandes einstellbar beziehungsweise verschiebbar und können mittels Steuerelemente positioniert werden.

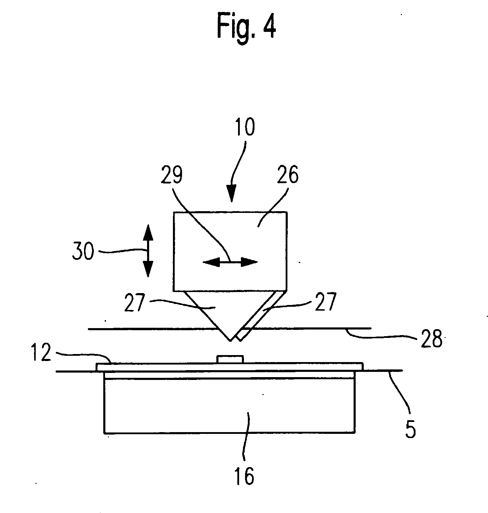

Fig. 4 zeigt in einer schematischen Seitenansicht eine Schneidevorrichtung 10 gemäß einer Ausführungsform der Erfindung, deren Messerhalter 26 mit Messern 27 zum Ausschneiden der einzelnen Mikrochipmodule 12 aus dem zweiten Trägerband 5 entlang der Pfeilrichtungen 29 und 30 verschiebbar ist. Hierfür weist die Schneidevorrichtung 10 mindestens zwei Messer 27 zum Ausschneiden der Module 12 auf, die durch einen Führungssteg 28 geführt werden. Der Pfeil 29 gibt die Schneidrichtung und der Pfeil 30 gibt den Messerhub an.

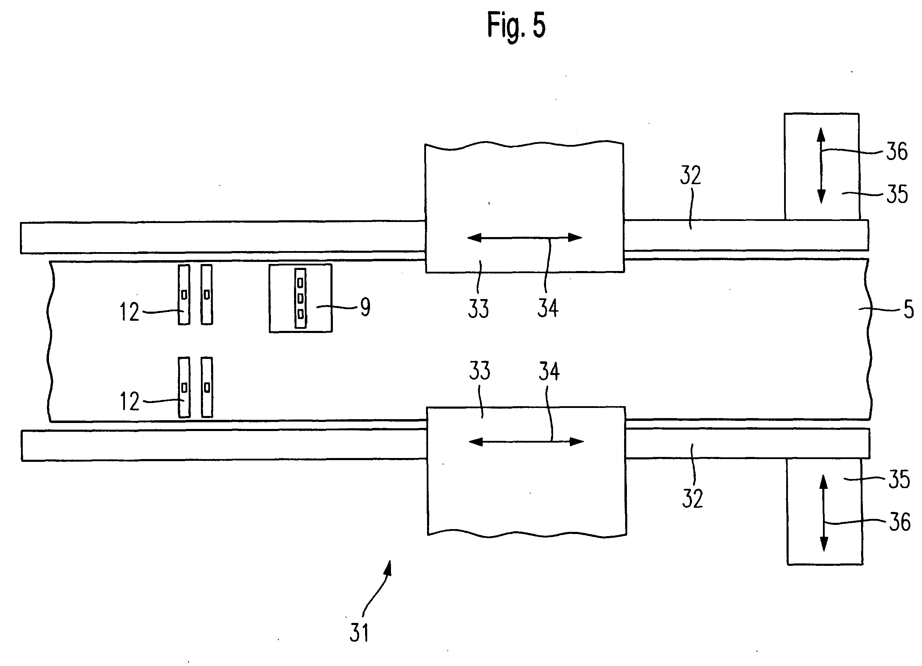

In Fig. 5 wird in einer schematischen Draufsicht eine Indexführungseinrichtung 31 zum seitlichen und vorwärts gerichteten Führen des zweiten Bandes 5 gezeigt. Hierfür weist die Indexführungseinrichtung 31 zwei Führungsschienen 32 und darauf verschiebbare Schlitten 33 für den Vorschub des Bandes 5, wie es durch die Pfeile 34 wiedergegeben wird auf. Zusätzlich sind Schlitten 35, die für die Querverschiebung, wie sie durch die Pfeile 36 angedeutet wird, angeordnet.

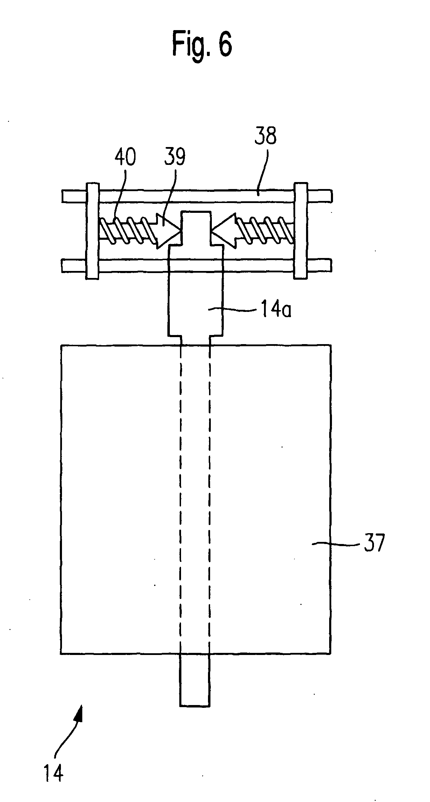

Die in Fig. 6 gezeigte elektromagnetische Antriebseinrichtung 14 für die Schlageinrichtung wirkt mit ihrem vorderen als Schlagbolzen ausgebildeten Anteil 14a durch eine Schiebebewegung auf die Montagewerkzeuge, die zum Durchsetzfügen der Mikrochipmodule auf das erste Trägerband 1 benötigt werden. Der Schlagbolzen 14a ist mit einer Einstelleinrichtung zum Einstellen der Magnetkraft verbunden, die im Wesentlichen aus einem Grundgestell 38, zwei Klemmkeilen 39 und einer Spiralfeder 40 besteht. Die Magnetkraft wird durch einen Magneten 37 erzeugt.

Sämtliche in den Anmeldungsunterlagen offenbarten Merkmale werden als erfindungswesentlich beansprucht, soweit sie einzeln oder in Kombination gegenüber dem Stand der Technik neu sind.

### Bezugszeichenliste

- 1: erstes Trägerband
- 2, 6: erste Rollen
- 3, 7: zweite Rollen
- 4, 8: Bandlaufrichtungen
- 5, 5a, 5b: zweites Trägerband
- 9, 9a, 9b: Wendekopfeinrichtung
- 10: Schneideeinrichtung
- 10a: Verschieberichtung der Schneideeinrichtung
- 11: Drehbewegung der Wendekopfeinrichtung
- 12: Mikrochipmodule
- 13: Kamera
- 14: elektromagnetische Antriebseinrichtung
- 14a: vorderer Anteil der elektromagnetischen Antriebseinrichtung
- 15: Verschieberichtung der Antriebseinrichtung
- 16: Niederhalter
- 17: Verschieberichtungen der Indexführungseinrichtung
- 18: Antennen
- 19: Schlageinrichtung
- 20: Kraftimpuls
- 21: Schwenkrichtung
- 22: Werkzeug
- 23: Fügewerkzeug
- 24: Amboss
- 25: Rückholeinrichtung
- 26: Messerhalter
- 27: Messer
- 28: Führungssteg
- 29: Schneidrichtung
- 30: Messerhub
- 31: Indexführungseinrichtung
- 32: Führungsschienen
- 33, 35: Schlitten
- 34, 36: Schlittenverschiebung
- 37: Magnet
- 38: Grundgestell
- 39: Klemmkeile
- 40: Spiralfedern

## Patentansprüche

1. Vorrichtung zum Verbinden von Mikrochipmodulen mit auf mindestens einem ersten Träger (1) angeordneten Antennen (18) zum Herstellen von Transpondern, insbesondere Smart Labels zum Übertragen der Mikrochipmodule (12) von mindestens einem zweiten Träger (5, 5a, 5b) auf vorbestimmte Stellen des ersten Trägers (1), wobei beide Träger (1; 5, 5a, 5b) übereinander schrittweise oder fortlaufend bewegbar sind,
**dadurch gekennzeichnet,dass**
die übereinander bewegbaren Träger (1; 5, 5a, 5b) an einem vorbestimmten Abschnitt parallel zueinander angeordnet sind und zwischen den Trägern (1; 5, 5a, 5b) eine um eine in Trägerbreitenrichtung verlaufende Achse drehbare Wendekopfeinrichtung (9) zur Übertragung einzelner Mikrochipmodule (12) von dem zweiten auf den ersten Träger (1; 5, 5a, 5b) mittels einer Drehbewegung (11) angeordnet ist.

2. Vorrichtung nach Anspruch 1,
**dadurch gekennzeichnet, dass**
die Wendekopfeinrichtung (9) mit einer Vakuumerzeugungseinrichtung zum Ansaugen mindestens eines Mikrochipmoduls (12), welches von dem zweiten Trägerband (5, 5a, 5b) gelöst ist, oder einer elektrostatisch anziehenden Einrichtung verbunden ist.

3. Vorrichtung nach Anspruch 1 oder 2,
**dadurch gekennzeichnet,dass**
die Wendekopfeinrichtung (9) um 180° oder 90° drehbar ist.

4. Vorrichtung nach einem der vorangegangenen Ansprüche,
**gekennzeichnet durch**
mindestens ein bei dem ersten Träger (1) angeordneten Montagewerkzeug (22, 23) zum Aufpressen, insbesondere Durchsetzfügen der **durch** die Wendekopfeinrichtung (9) an der vorbestimmtem Stelle des ersten Trägers (1) angeordneten Mikrochipmoduls (12) auf den ersten Träger (1) im Bereich der Antennen (18).

5. Vorrichtung nach Anspruch 4,
**dadurch gekennzeichnet,dass**
das Montagewerkzeug (22) mit einer elektromagnetischen Antriebseinrichtung (14) zum beschleunigten Bewegen des Montagewerkzeuges in Richtung der aufzupressenden Mikrochipmodule (12) und zur Durchführung des Aufpressvorganges mit einer vorbestimmten Eindringtiefe der Mikrochipmodule (12) in den ersten Träger (1) verbunden ist, wobei die Antriebseinrichtung (14) mit einer Einstelleinrichtung (38, 39, 40) zum Einstellen einer vorbestimmbaren Kraft, bei der eine Aktivierung der Antriebseinrichtung (14) stattfindet, verbunden ist.

6. Vorrichtung nach einem der vorangegangenen Ansprüche,
**gekennzeichnet durch**
eine Trenneinrichtung (10) zum Abtrennen der Mikrochipmodule (12) von dem zweiten Träger (5, 5a, 5b).

7. Vorrichtung nach Anspruch 6
**dadurch gekennzeichnet,dass**
die Trenneinrichtung (10) eine Schneideeinrichtung ist, die mindestens ein Messerelement (27) umfasst.

8. Vorrichtung nach einem der Ansprüche 5-7,
**dadurch gekennzeichnet, dass**
die Montagewerkzeuge mittels einer Steuereinrichtung in Abhängigkeit von den momentanen Positionierungen der Trenneinrichtung (10), der Wendekopfeinrichtung (9) und der aufzupressenden Mikrochipmodule (12) bewegbar sind.

9. Vorrichtung nach einem der Ansprüche 6-8
**gekennzeichnet durch**
eine Indexführungseinrichtung (31) zum Führen des zweiten Trägers (5, 5a, 5b) in Vorschub- und seitlicher Richtung, um eine genaue Positionierung einzelner Mikrochipmodule (12) in Bezug auf die Trenneinrichtung (10) und die Wendekopfeinrichtung (9) durchzuführen.

10. Vorrichtung nach einem der vorangegangenen Ansprüche,
**dadurch gekennzeichnet,dass**
die Träger (1; 5, 5a, 5b) als Trägerbänder von ersten Rollen (2, 6) abwickelbar und auf zweite Rollen (3, 7) aufwickelbar sind.

11. Verfahren zum Verbinden von Mikrochipmodulen mit auf mindestens einem ersten Träger (1) angeordneten Antennen (18) zum Herstellen von Transpondern, insbesondere Smart Labels, bei dem die Mikrochipmodule (12) von mindestens einem zweiten Träger (5, 5a, 5b) abgelöst und auf vorbestimmte Stellen des ersten Trägers (1) aufgebracht werden, wobei beide Träger übereinander gebracht werden,
**dadurch gekennzeichnet, dass**
die übereinander gebrachten Träger (1; 5, 5a, 5b) an einem vorbestimmten Abschnitt parallel zueinander verlaufen und mittels einer zwischen den Trägern (1; 5, 5a, 5b) um eine in Trägerbreitenrichtung verlaufende Achse drehbare Wendekopfeinrichtung (9) einzelne Mikrochipmodule (12) von dem zweiten auf den ersten Träger (1; 5, 5a, 5b) mittels einer Drehbewegung (11) übertragen werden.

12. Verfahren nach Anspruch 11,
**dadurch gekennzeichnet,dass**
die Wendekopfeinrichtung (9) mittels eines erzeugten Vakuums mindestens ein Mikrochipmodul (12) ansaugt, welches von dem zweiten Träger (5, 5a, 5b) zuvor gelöst worden ist, und durch eine Drehbewegung von vorzugsweise 180° auf die vorbestimmten Stellen des darunter liegenden ersten Trägers (1) ablegt.

13. Verfahren nach Anspruch 12 oder 13,
**dadurch gekennzeichnet, dass**
ein Trennvorgang zum Abtrennen einzelner Mikrochipmodule (12) von dem zweiten Träger (5, 5a, 5b) und ein Aufpressvorgang zum Aufpressen, insbesondere Durchsetzfügen weiterer einzelner Mikrochipmodule (12) auf den ersten Träger (1) zeitgleich stattfinden.

## Claims

1. An apparatus for joining microchip modules to antennas (18) which are arranged on at least one first support (1) for producing transponders, in particular smart labels, for transferring the microchip modules (12) from at least one second support (5, 5a, 5b) to predefined locations on the first support (1), wherein the two supports (1; 5, 5a, 5b) can be moved in steps or continuously one above the other, **characterized in that** the supports (1; 5, 5a, 5b) which can be moved one above the other are arranged parallel to one another at a predefined section, and arranged between the supports (1; 5, 5a, 5b) is a turning head device (9) for transferring individual microchip modules (12) from the second to the first support (1; 5, 5a, 5b) by way of a rotational movement (11), which turning head device can rotate about an axis that runs in the direction of the support width.

2. The apparatus as claimed in claim 1, **characterized in that** the turning head device (9) is connected to a vacuum-generating device for exerting suction on at least one microchip module (12) which is detached from the second support strip, or to an electrostatic attraction device.

3. The apparatus as claimed in claim 1 or 2, **characterized in that** the turning head device (9) can be rotated through 180° or 90°.

4. The apparatus as claimed in any of the preceding claims, **characterized by** at least one assembly tool (22, 23) which is arranged on the first support (1) for pressing, in particular clinching, the microchip module (12) arranged at the predefined location on the first support (1) by the turning head device (9) onto the first support (1) in the region of the antennas (18).

5. The apparatus as claimed in claim 4, **characterized in that** the assembly tool (22) is connected to an electromagnetic drive device (14) for moving the assembly tool in an accelerated manner in the direction of the microchip modules (12) to be pressed on and for carrying out the pressing operation with a predefined depth of penetration of the microchip modules (12) into the first support (1), wherein the drive device (14) is connected to an adjustment device (38, 39, 40) for setting a predefinable force at which activation of the drive device (14) takes place.

6. The apparatus as claimed in any of the preceding claims, **characterized by** a separating device (10) for separating the microchip modules (12) from the second support (5, 5a, 5b).

7. The apparatus as claimed in claim 6, **characterized in that** the separating device (10) is a cutting device which comprises at least one blade element (27).

8. The apparatus as claimed in any of claims 5 to 7, **characterized in that** the assembly tools can be moved by means of a control device as a function of the current positions of the separating device (10), the turning head device (9) and the microchip modules (12) which are to be pressed on.

9. The apparatus as claimed in any of claims 6 to 8, **characterized by** an index guide device (31) for guiding the second support (5, 5a, 5b) in the direction of advance and the lateral direction, in order to carry out precise positioning of individual microchip modules (12) with respect to the separating device (10) and the turning head device (9).

10. The apparatus as claimed in any of the preceding claims, **characterized in that** the supports (1; 5, 5a, 5b), as support strips, can be unwound from first rolls (2, 6) and wound onto second rolls (3, 7).

11. A method for joining microchip modules to antennas (18) which are arranged on at least one first support (1) for producing transponders, in particular smart labels, in which the microchip modules (12) are detached from at least one second support (5, 5a, 5b) and are applied to predefined locations on the first support (1), wherein the two supports are moved one above the other, **characterized in that** the supports (1; 5, 5a, 5b) which are moved one above the other run parallel to one another at a predefined section, and, by means of a turning head device (9) which can rotate between the supports (1; 5, 5a, 5b) about an axis that runs in the direction of the support width, individual microchip modules (12) are transferred from the second to the first support (1; 5, 5a, 5b) by way of a rotational movement (11).

12. The method as claimed in claim 11, **characterized in that**, by means of a vacuum which is produced, the turning head device (9) exerts suction on at least one microchip module (12) which has previously been detached from the second support (5, 5a, 5b) and, by virtue of a rotational movement of preferably 180°, places it at the predefined location on the first support (1) lying therebelow.

13. The method as claimed in claim 12 or 13, **characterized in that** a separating operation for separating individual microchip modules (12) from the second support (5, 5a, 5b) and a pressing operation for pressing, in particular clinching, other individual microchip modules (12) onto the first support (1) take place simultaneously.

## Revendications

1. Dispositif permettant de relier des modules micropuce à des antennes (18) disposées sur au moins un premier support (1) afin de fabriquer des transpondeurs, en particulier les Smart Labels pour transférer les modules micropuce (12) d'au moins un deuxième support (5, 5a, 5b) à des emplacements prédéterminés du premier support (1), les deux supports (1 ; 5, 5a, 5b) pouvant être déplacés de manière continue ou progressive les uns au-dessus des autres,
**caractérisé en ce que**
les supports (1 ; 5, 5a, 5b) pouvant être déplacés les uns au-dessus des autres sont disposés parallèlement les uns aux autres au niveau d'une section prédéterminée et, entre les supports (1 ; 5, 5a, 5b), est disposé un dispositif à tête pivotante (9) pouvant pivoter autour d'un axe s'étendant dans le sens de la largeur de support afin de transférer les différents modules micropuce (12) du deuxième support sur le premier support (1; 5, 5a, 5b) par mouvement de rotation (11).

2. Dispositif selon la revendication 1, **caractérisé en ce que** le dispositif à tête pivotante (9) est relié à un dispositif produisant du vide permettant d'aspirer au moins un module micropuce (12), qui est détaché de la deuxième bande porteuse (5, 5a, 5b), ou un dispositif produisant une attraction par voie électrostatique.

3. Dispositif selon la revendication 1 ou 2, **caractérisé en ce que** le dispositif à tête pivotante (9) peut être pivoté selon un angle de 180° ou 90°.

4. Dispositif selon l'une quelconque des revendications précédentes, **caractérisé par** au moins un outil de montage (22, 23) disposé sur le premier support (1) afin d'engager par pression, en particulier d'assembler par interpénétration le module micropuce (12) disposé à un emplacement prédéterminé du premier support (1) grâce au dispositif à tête pivotante (9) sur le premier support (1) dans la zone des antennes (18).

5. Dispositif selon la revendication 4, **caractérisé en ce que** l'outil de montage (22) est relié à un dispositif d'entraînement électromagnétique (14) permettant de déplacer de manière accélérée l'outil de montage en direction des modules micropuce (12) devant être engagés par pression et de réaliser l'opération d'engagement par pression avec une profondeur de pénétration prédéterminée des modules micropuce (12) dans le premier support (1), moyennant quoi le dispositif d'entraînement (14) est relié à un dispositif de réglage (38, 39, 40) permettant de régler une force pouvant être prédéterminée, sachant qu'une activation du dispositif d'entraînement (14) intervient.

6. Dispositif selon l'une quelconque des revendications précédentes, **caractérisé en ce qu'**il comporte un dispositif de séparation (10) permettant de séparer les modules micropuce (12) du deuxième support (5, 5a, 5b).

7. Dispositif selon la revendication 6, **caractérisé en ce que** le dispositif de séparation (10) est un dispositif de coupe, qui comporte au moins un élément de couteau (27).

8. Dispositif selon l'une quelconque des revendications 5 à 7, **caractérisé en ce que** les outils de montage peuvent être déplacés à l'aide d'un dispositif de commande en fonction des positions instantanées du dispositif de séparation (10), du dispositif à tête pivotante (9) et des modules micropuce (12) devant être engagés par pression.

9. Dispositif selon l'une quelconque des revendications 6 à 8, **caractérisé en ce qu'**il comporte un dispositif de guidage par repérage (31) permettant de guider le deuxième support (5, 5a, 5b) selon une direction d'avancement et latérale, afin d'obtenir un positionnement précis des différents modules micropuce (12) par rapport au dispositif de séparation (10) et au dispositif à tête pivotante (9).

10. Dispositif selon l'une quelconque des revendications précédentes, **caractérisé en ce que** les supports (1 ; 5, 5a, 5b), sous la forme de bandes porteuses, peuvent être déroulés à partir des premières bobines (2, 6) et enroulés sur les deuxièmes bobines (3, 7).

11. Procédé permettant de relier les modules micropuce à des antennes (18) disposées sur au moins un premier support (1) afin de fabriquer des transpondeurs, en particulier des Smart Labels, dans lequel les modules micropuce (12) sont détachés d'au moins un deuxième support (5, 5a, 5b) et appliqués à des emplacements prédéterminés du premier support (1), les deux supports étant disposés les uns au-dessus des autres,
**caractérisé en ce que**
les supports (1, 5, 5a, 5b) disposés les uns au-dessus des autres s'étendent parallèlement les uns aux autres au niveau d'une section prédéterminée et, à l'aide d'un dispositif à tête pivotante (9) pouvant tourner autour d'un axe s'étendant dans le sens de la largeur du support, entre les supports (1 ; 5, 5a, 5b), différents modules micropuce (12) sont transférés du deuxième -support au premier support (1 ; 5, 5a, 5b) grâce à un mouvement de rotation.

12. Procédé selon la revendication 11, **caractérisé en ce que** le dispositif à tête pivotante (9) aspire, à l'aide d'un vide créé, au moins un module micropuce (12), qui a auparavant été détaché du deuxième support (5, 5a, 5b) et grâce à un mouvement de rotation de préférence de 180°, le dépose aux emplacements prédéterminés du premier support (1) qui se trouve en dessous.

13. Procédé selon la revendication 12, **caractérisé en ce que** l'opération de séparation permettant de séparer les différents modules micropuce (12) du deuxième support (5, 5a, 5b) et l'opération d'engagement par pression permettant d'engager par pression, en particulier d'assembler par interpénétration les différents modules micropuce (12) supplémentaires sur le premier support (1), sont réalisées simultanément.
